# EUROPEAN PATENT SPECIFICATION

(11) **EP 2 227 890 B1**
(45) Date of publication and mention of the grant of the patent: **27.05.2015**
(21) Application number: 08760787.5
(22) Date of filing: 10.06.2008
(51) Int. Cl.: H04L 29/06, H04L 29/12

(54) **Methods for facilitating communication between Internet Protocol Multimedia Subsystem (IMS) devices and non-IMS devices**
Verfahren zur Ermöglichung der Kommunikation zwischen Einrichtungen des Internet Protocol Multimedia Subsystem (IMS) und nicht-IMS-Einrichtungen
Procédés pour faciliter la communication entre des dispositifs de sous-systèmes multimédia de protocole internet (IMS) et des dispositifs non IMS

(30) Priority: 31.12.2007 US 18142; 08.04.2008 US 99375
(43) Date of publication of application: 15.09.2010
(73) Proprietor: Sony Ericsson Mobile Communications AB, 221 88 Lund (SE)
(72) Inventor: APELQVIST, Johan, SE-257 34 Rydebäck (SE); ANDREASSON, Måns Folke Markus, SE-222 21 Lund (SE); BACKLUND, Erik Johan Vendel, S-253 73 Gantofta (SE); BENGTSSON, Henrik, S-227 38 Lund (SE)
(74) Representative: Valea AB
(86) International application number: PCT/EP2008/057227
(87) International publication number: WO 2009/083280

(56) References cited:
- EP-A- 1 770 949
- WO-A-2005/094022
- WO-A-2007/120875
- US-A1- 2002 110 104
- US-A1- 2004 148 416
- US-A1- 2007 004 391

## Description

### BACKGROUND OF THE INVENTION

The present invention relates to communication networks, and, more particularly, to methods, electronic devices, and computer program products for communicating using an Internet Protocol (IP) Multimedia Subsystem (IMS) network.

The Internet Protocol (IP) Multimedia Subsystem (IMS) is a standard that has been developed to define the control and integration of multimedia services in a core, packet-switched network. In particular, the IMS architecture defines a set of logical functions that use a signaling protocol known as the Session Initiation Protocol (SIP) to establish communication sessions in an IP network. A "session" may be, for example, a one-to-one voice call or a more complex interaction, such as a one-to-many conference call involving multimedia services. SIP may also be used to facilitate voice over IP (VoIP) services, in which voice is transported in IP data packets that are re-assembled and converted into an audio signal for the recipient. IMS may be characterized as a standardized way to connect IP devices and networks using SIP.

Unfortunately, as IMS is deployed in various communication networks, many consumers may not yet have upgraded to IMS enabled phones and devices to subscribe to the services provided in the IMS network. Moreover, many consumers may use services that allow special types of communication with friends, such as chat and/or file-sharing, that may not work properly or at all if the various participants are on different networks that have not all evolved to using IMS.

EP 1770949 discloses a method for a CS domain user accessing an IMS domain, including: an access gateway control function (AGCF) entity maps CS domain signaling messages forwarded by a mobile switch center (MSC)/visiting location register (VLR) to session initiation protocol (SIP) signaling messages and transmits the SIP signaling messages to a call session control function (CSCF) entity in the IMS domain; the AGCF entity maps the SIP signaling messages transmitted from the IMS domain to the CS domain to the CS domain signaling messages and then transmits the CS domain signaling messages to the MSC/VLR. Also, a communication system and an AGCF entity are disclosed. Less updating and reconstruction of the existing network is required.

US 2007/004391 discloses a mobile data communications system and a method. Data communications between mobile applications executing on wireless mobile devices and complementary applications hosted on remote application servers are to provide access to various services, by using a communications protocol provided by said applications that runs on top of the basic data transmission service provided by conventional wireless mobile data operator services to which the mobile devices are connected. Mobile devices can download a variety of different mobile applications to afford access to a variety of different services and enterprise applications.

### SUMMARY OF THE INVENTION

The invention is related to methods for operating a bridge device to establish communication between an Internet Protocol, IP Multimedia Subsystem, IMS device and a non-IMS device according to claims 1 and 7. Further embodiments are disclosed in the dependent claims.

### BRIEF DESCRIPTION OF THE DRAWINGS

Other features of the present invention will be more readily understood from the following detailed description of specific embodiments thereof when read in conjunction with the accompanying drawings, in which:
FIG. 1 is a block diagram that illustrates an Internet Protocol (IP) Multimedia Subsystem (IMS) network architecture, in accordance with some embodiments of the present invention;
FIG. 2 is a block diagram that illustrates an IMS electronic device/mobile terminal in accordance with some embodiments of the present invention;
FIG. 3 is a block diagram that illustrates a non-IMS electronic device/mobile terminal in accordance with some embodiments of the present invention;
FIGS. 4 - 6 are message flow diagrams that illustrate operations for facilitating communication with non-IMS devices over an IMS network, in accordance with some embodiments of the present invention;
FIG. 7 is a block diagram that illustrates an IMS network architecture in accordance with further embodiments of the present invention;
FIG. 8 is a message flow diagram that illustrates operations for facilitating communication between IMS devices associated with different IMS networks in accordance with some embodiments of the present invention;
FIG. 9 is a block diagram that illustrates an IMS network architecture in accordance with still further embodiments of the present invention; and
FIG. 10 is a message flow diagram that illustrates operations for facilitating communication between IMS devices associated with different IMS networks in accordance with further embodiments of the present invention.

### DETAILED DESCRIPTION OF EMBODIMENTS

While the invention is susceptible to various modifications and alternative forms, specific embodiments thereof are shown by way of example in the drawings and will herein be described in detail. Like reference numbers signify like elements throughout the description of the figures.

As used herein, the singular forms "a," "an," and "the" are intended to include the plural forms as well, unless expressly stated otherwise. It should be further understood that the terms "comprises" and/or "comprising" when used in this specification is taken to specify the presence of stated features, integers, steps, operations, elements, and/or components, but does not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and this specification and will not be interpreted in an idealized or overly formal sense unless expressly so defined herein.

The present invention may be embodied as methods, electronic devices, and/or computer program products. Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, or device. More specific examples (a nonexhaustive list) of the computer-readable medium would include the following: a portable computer diskette, a random access memory (RAM), a read-only memory (ROM), an erasable programmable read-only memory (EPROM or Flash memory), and a compact disc read-only memory (CD-ROM).

As used herein, the term "mobile terminal" may include a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices.

For purposes of illustration, embodiments of the present invention are described herein in the context of a mobile terminal. It will be understood, however, that the present invention is not limited to such embodiments and may be embodied generally as an electronic device that can be configured to communicate with one or more other electronic devices over an Internet Protocol (IP) Multimedia Subsystem (IMS) network

As used herein, the term "IMS terminal or device" refers to a terminal or device that may communicate using the Session Initiation Protocol (SIP). It will be understood that an IMS terminal or device may also refer to devices that communicate using SIP via a media gateway, which translates communications, for example, between an IP network and another network, such as the public switched telephone network or a circuit switched wireless network. As used herein, the term "message" means a unit of information and/or a block of data that may be transmitted electronically as a whole or via segments from one device to another. Accordingly, as used herein, the term "message" may encompass such terms of art as "frame" and/or "packet," which may also be used to refer to a unit of transmission.

Some embodiments of the present invention arise from the use of an IMS Bridge device that can be used to setup communication sessions between IMS devices and non-IMS devices or between non-IMS devices over an IMS network. Once a communication session is established, the IMS Bridge device may translate messages received from the respective endpoint devices between IMS and non-IMS formats.

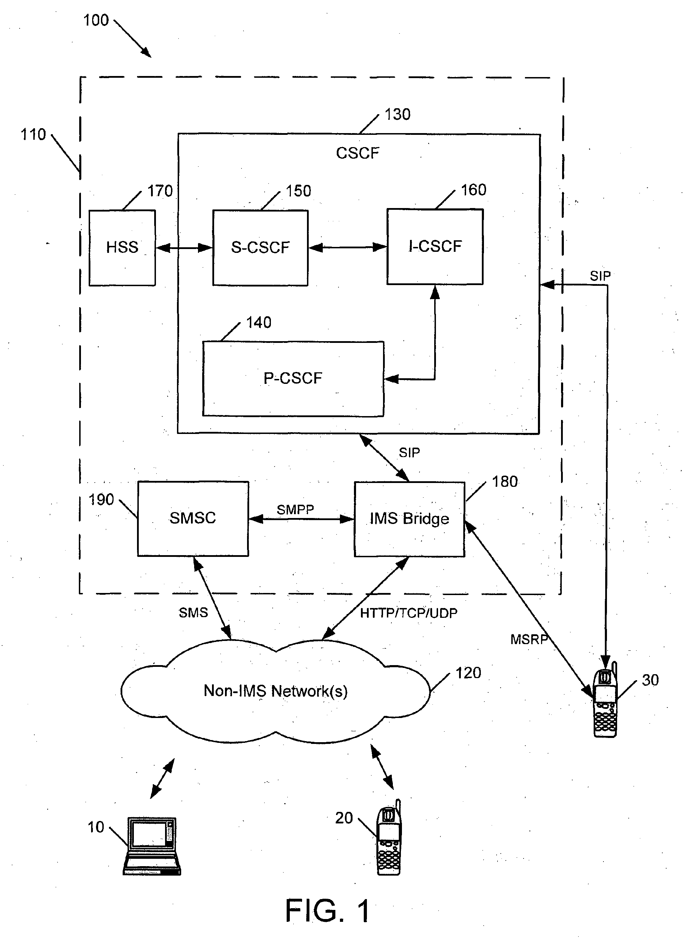

Referring now to FIG. 1, an exemplary communication network 100, in accordance with some embodiments of the present invention, includes an IMS network 110 that is coupled to non-IMS network(s) 120, which may provide connectivity to the IMS network 110 for devices 10, 20, such as mobile terminals, WiFi-equipped computing devices, modems, and other devices. A device may connect to the IMS network 110 using any of a number of different interfaces, generally depending on the nature of the device. The devices 10, 20 may include IP devices that are capable of communicating via the Hypertext Transfer Protocol (HTTP), Transmission Control Protocol (TCP), and/or the User Datagram Protocol (UDP) format in accordance with various embodiments of the present invention.

The IMS network 110, in accordance with some embodiments of the present invention, includes apparatus configured to provide a variety of different functions linked by standardized interfaces. Generally, functions of the IMS network 110 include a bundle of functions of SIP servers or proxies, collectively referred to as a Call Session Control Function (CSCF) 130, which are used to process (Session Initiation Protocol) SIP signaling packets in the IMS network 110. It will be appreciated that the CSCF 130 may be implemented as a single server, separate servers, or a network of servers either co-located in a server farm, for example, or located in different geographic regions. Functions of the CSCF 130 may include: registration of devices with the IMS network 110; routing and inspection of signaling messages; authentication of users and establishment of security associations; compression, decompression and other signal processing functions; authorization of resources; policy enforcement; bandwidth management; and generation of charging records. It will be understood that, in accordance with some embodiments of the present invention, these functions may be apportioned among several call session control function proxies or servers, such as a Proxy-CSCF (P-CSCF) 140, Interrogating-CSCF (I-CSCF) 160, Serving-CSCF (S-CSCF) 150, and various other functions, gateways and the like.

The P-CSCF 140 may be configured as a SIP proxy to function as an interface to the IMS network 110 for IMS terminals/devices 30. The P-CSCF 140 may enable the registration of IMS terminals/devices and the routing of SIP and/or HyperText Transfer Protocol (HTTP) signaling messages between the devices 10, 20, 30 and service providers. The P-CSCF 140 may communicate with devices 10, 20 via the packet network(s) 110 and may communicate with devices coupled to a circuit-switched network via a Media Gateway Control Function (not shown).

The S-CSCF 150 performs session control and communicates with a Home Subscriber Server (HSS) database 170, which maintains a service profile and other information for each end-user and associated IMS terminal/device that has registered with the IMS network 110. The profile and other information may include, but is not limited to, IP address information, roaming information, and/or telephony services information. The S-CSCF 150 handles SIP registrations, which allows it to bind the IP address of an IMS terminal with a SIP address. The S-CSCF 150 inspects all signaling messages and determines which application server(s) a SIP message should be routed to. The I-CSCF 160 defines the edge of an administrative domain. The IP address for the I-CSCF 160 is publicly accessible via DNS so that remote servers can find it and use it as an entry point for SIP packets/messages into this domain.

The IMS network 110 further includes an IMS Bridge 180 that provides a gateway between the SIP based IMS network 110 and the non-IMS HTTP/TCP/UDP based network 120. The IMS Bridge 180 is configured to facilitate communication sessions between IMS enabled devices, such as device 130 and non-IMS enabled devices, such as devices 10, 20. In some embodiments, the IMS Bridge 180 may be configured to facilitate communication sessions between two non-IMS enabled devices over the IMS network 110. In addition to participating in the setup of these communication sessions, the IMS Bridge 180 may translate messages between an IMS format, such as SIP and/or Message Session Relay Protocol (MSRP), and a non-IMS format, such as HTTP, TCP, and/or UDP. The IMS Bridge 180 may communicate with a Short Message Service Center (SMSC) 190 using the Short Message Peer-to-Peer protocol (SMPP) to receive and deliver Short Message Service (SMS) messages to non-IMS enabled devices 10, 20. In particular, SMS messaging may be used to launch an IMS service application stored on a non-IMS enabled device. In some embodiments, the SMS message may include a Uniform Resource Indicator (URI) that identifies a location where the application may be downloaded from. In further embodiments, even if the application is already installed, an updated or different version of the application may be downloaded and installed before it is launched.

The various elements of the communication network 100 may be connected by a global network, such as the Internet or other publicly accessible network. Various elements of the network may be interconnected by a wide area network, a local area network, an Intranet, and/or other private network, which may not be accessible by the general public. Thus, the communication network 100 may represent a combination of public and private networks or a virtual private network (VPN). Although FIG. 1 illustrates an exemplary communication network, it will be understood that the present invention is not limited to such configurations, but is intended to encompass any configuration capable of carrying out the operations described herein.

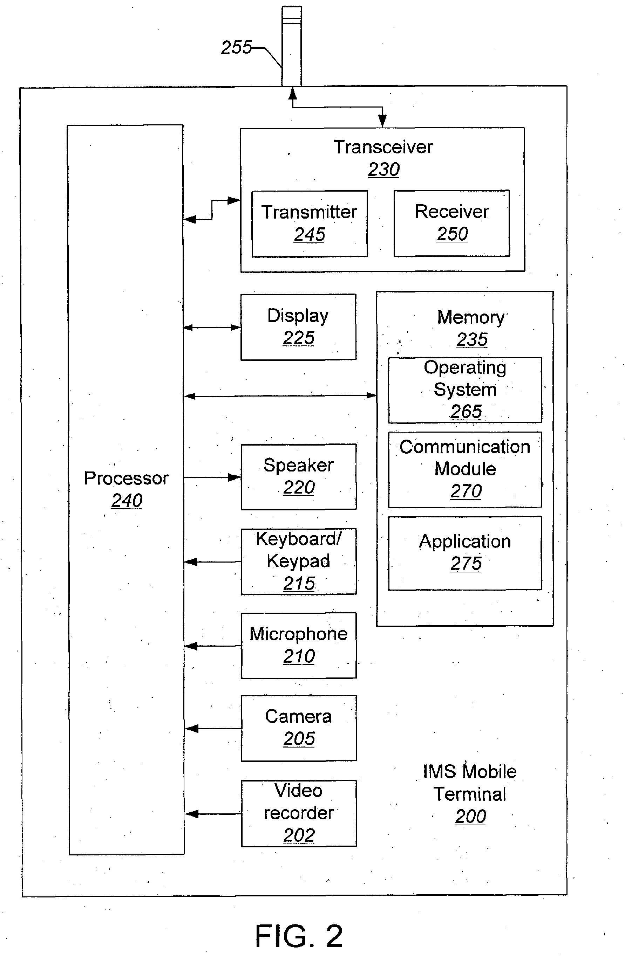

Referring now to FIG. 2, an exemplary mobile terminal 200 that may be used to implement IMS device/terminal 30 of FIG. 1, in accordance with some embodiments of the present invention, includes a video recorder 202, a camera 205, a microphone 210, a keyboard/keypad 215, a speaker 220, a display 225, a transceiver 230, and a memory 235 that communicate with a processor 240. The transceiver 230 comprises a transmitter circuit 245 and a receiver circuit 250, which respectively transmit outgoing radio frequency signals to base station transceivers and receive incoming radio frequency signals from the base station transceivers via an antenna 255. The radio frequency signals transmitted between the mobile terminal 200 and the base station transceivers may comprise both traffic and control signals (*e.g.,* paging signals/messages for incoming calls), which are used to establish and maintain communication with another party or destination. The radio frequency signals may also comprise packet data information, such as, for example, cellular digital packet data (CDPD) information. The foregoing components of the mobile terminal 200 may be included in many conventional mobile terminals and their functionality is generally known to those skilled in the art.

The processor 240 communicates with the memory 235 via an address/data bus. The processor 240 may be, for example, a commercially available or custom microprocessor. The memory 235 is representative of the one or more memory devices containing the software and data used to provide a phone-based Web server with a private IP address, in accordance with some embodiments of the present invention. The memory 235 may include, but is not limited to, the following types of devices: cache, ROM, PROM, EPROM, EEPROM, flash, SRAM, and DRAM.

As shown in FIG. 2, the memory 235 may contain up to three or more categories of software and/or data: the operating system 265, a communication module 270, and an application module 275. The operating system 265 generally controls the operation of the mobile terminal 200. In particular, the operating system 265 may manage the mobile terminal's software and/or hardware resources and may coordinate execution of programs by the processor 240. The communication module 270 may be configured implement SIP functionality to allow the mobile terminal 200 to use SIP to establish communication sessions. Moreover, the communication module 270 may be configured to communicate with the IMS network 110 of FIG. 1 to register the mobile terminal 200 in the HSS 170, for example. The communication module 270 may further include an IP stack to carry out communications using IP. The application module 275 may be configured to support one or more services that may be provided over the IMS network 110.

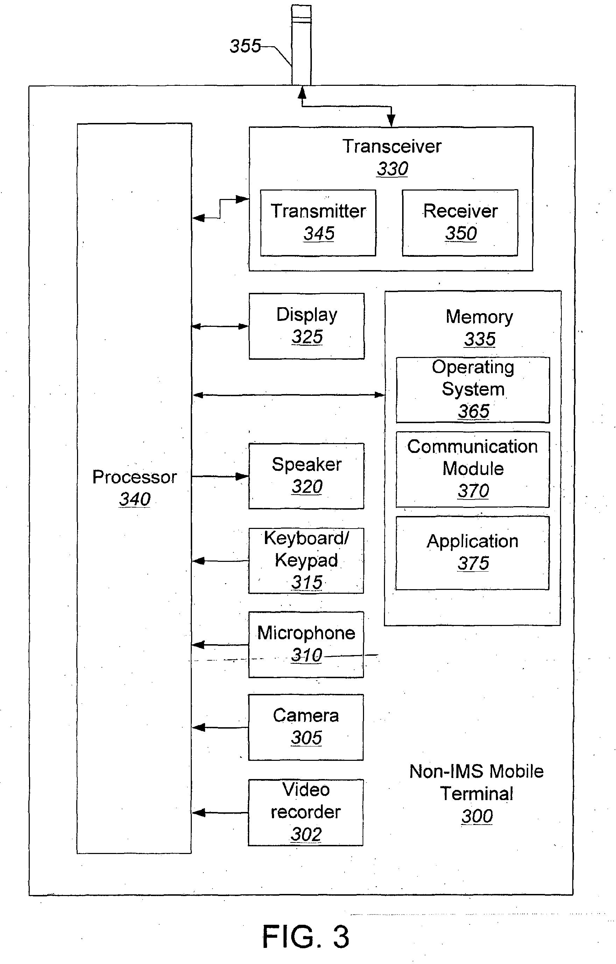

Referring now to FIG. 3, an exemplary mobile terminal 200 that may be used to implement non-IMS devices/terminals 10, 20 of FIG. 1, in accordance with some embodiments of the present invention, includes a video recorder 302, a camera 305, a microphone 310, a keyboard/keypad 315, a speaker 320, a display 325, a transceiver 330, and a memory 335 that communicate with a processor 340. The transceiver 330 comprises a transmitter circuit 345 and a receiver circuit 350, which respectively transmit outgoing radio frequency signals to base station transceivers and receive incoming radio frequency signals from the base station transceivers via an antenna 355. The radio frequency signals transmitted between the mobile terminal 300 and the base station transceivers may comprise both traffic and control signals (*e.g.,* paging signals/messages for incoming calls), which are used to establish and maintain communication with another party or destination. The radio frequency signals may also comprise packet data information, such as, for example, cellular digital packet data (CDPD) information. The foregoing components of the mobile terminal 300 may be included in many conventional mobile terminals and their functionality is generally known to those skilled in the art.

The processor 340 communicates with the memory 335 via an address/data bus. The processor 340 may be, for example, a commercially available or custom microprocessor. The memory 335 is representative of the one or more memory devices containing the software and data used to provide a phone-based Web server with a private IP address, in accordance with some embodiments of the present invention. The memory 335 may include, but is not limited to, the following types of devices: cache, ROM, PROM, EPROM, EEPROM, flash, SRAM, and DRAM.

As shown in FIG. 3, the memory 335 may contain up to three or more categories of software and/or data: the operating system 365, a communication module 370, and an application module 375. The operating system 365 generally controls the operation of the mobile terminal 300. In particular, the operating system 365 may manage the mobile terminal's software and/or hardware resources and may coordinate execution of programs by the processor 340. The communication module 370 may be configured implement HTTP/TCP/UDP functionality to allow the mobile terminal 300 to establish communication sessions. The communication module 370 may further include an IP stack to carry out communications using IP. The application module 375 may be configured to support one or more services that may be provided over the IMS network 110.

Although FIGS. 2 and 3 illustrate an exemplary software and hardware architecture that may be used to provide IMS and non-IMS mobile terminals that may communicate over an IMS network equipped with an IMS Bridge 180 as shown in FIG. 1, it will be understood that the present invention is not limited to such a configuration, but is intended to encompass any configuration capable of carrying out the operations described herein.

Computer program code for carrying out operations of devices and/or systems discussed above with respect to FIGS. 1 - 3 may be written in a high-level programming language, such as Java, C, and/or C++, for development convenience. In addition, computer program code for carrying out operations of embodiments of the present invention may also be written in other programming languages, such as, but not limited to, interpreted languages. Some modules or routines may be written in assembly language or even micro-code to enhance performance and/or memory usage. It will be further appreciated that the functionality of any or all of the program modules may also be implemented using discrete hardware components, one or more application specific integrated circuits (ASICs), or a programmed digital signal processor or microcontroller.

The present invention is described hereinafter with reference to message flow, flowchart and/or block diagram illustrations of methods, mobile terminals, electronic devices, communication networks, and/or computer program products in accordance with some embodiments of the invention. These message flow, flowchart and/or block diagrams further illustrate exemplary operations of IMS and non-IMS devices communicating over an IMS network. It will be understood that each message/block of the message flow, flowchart and/or block diagram illustrations, and combinations of messages/blocks in the message flow, flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions specified in the message flow, flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the message flow, flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the message flow, flowchart and/or block diagram block or blocks.

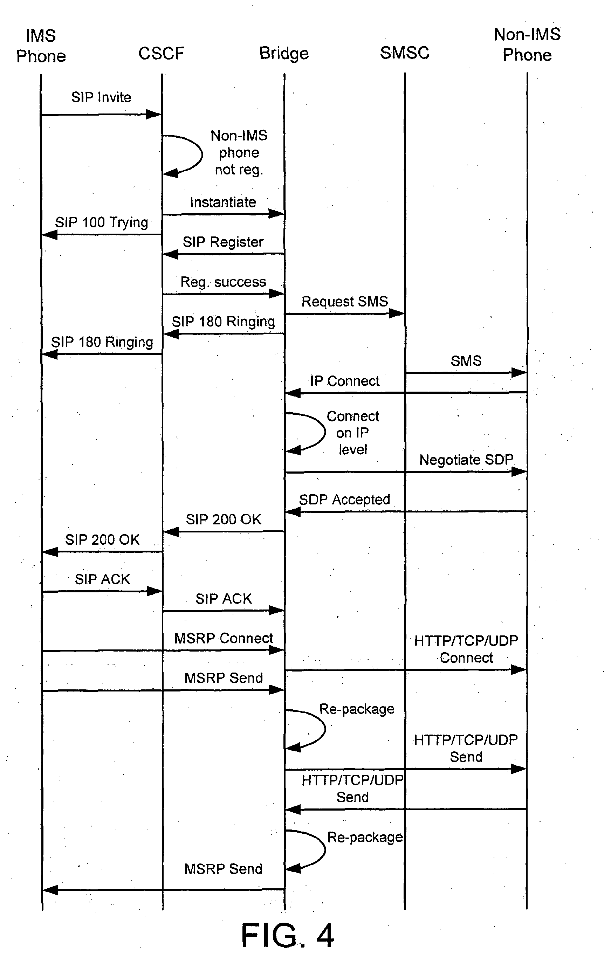

FIG. 4 is a message flow diagram that illustrates operations for facilitating a communication session between an IMS device and a non-IMS device in which the IMS device initiates the call to the non-IMS device, in accordance with some embodiments of the present invention. Referring to FIGS. 4 and 1, an IMS device, such as an IMS phone, initiates the communication session by sending a SIP Invite message to the CSCF 130, which recognizes that the called device is a non-IMS device, such as a non-IMS phone, or an IMS device that is part of a different IMS network (i.e., different domain) and, therefore, is not registered. The CSCF 130 communicates with the IMS Bridge 180 to instantiate a registration procedure for the IMS Bridge 180 with the IMS network as a proxy for the called non-IMS device. The CSCF 130 also informs the calling IMS device that the call attempt is in progress with a SIP 100 trying message.

The IMS Bridge 180 registers itself with the IMS network 110 via the CSCF 130 and sends a call request message to the SMSC 190. The IMS Bridge 180 initiates a SIP 180 ringing message, which is sent to the originating IMS device via the CSCF 130.

The SMSC 190 forwards an SMS call request message to the non-IMS device, which causes the application 375 installed thereon to launch. In some embodiments, if the application 375 is not currently installed, then the SMS request message may include a Uniform Resource Indicator (URI) that identifies a location where the application may be downloaded from. In some embodiments, even if the application 375 is already installed, an updated or different version of the application may be downloaded and installed before it is launched. The non-IMS device may then communicate with the IMS Bridge 180 to establish a network level, e.g. IP level connection, between the IMS device and the non-IMS device. The IMS Bridge 180 may then use a protocol called Session Description Protocol (SDP) to convey the details of the description of the communication session to the non-IMS device. SDP provides a standard representation for describing communication session metadata to participants. In general, SDP is used to convey sufficient information to enable an application to join a session and to announce the resources to be used to any non-participants that may have a need to know. In accordance with some embodiments of the present invention, the IMS Bridge 180 may use SDP to negotiate a media type and/or communication format with the non-IMS device.

After negotiating any SDP parameters with the non-IMS device, the IMS Bridge 180 may inform the IMS device via the CSCF 130 that the call setup has been successful using the SIP 200 OK message. The IMS device may send a SIP ACK message to the IMS Bridge 180 and may follow the acknowledgement by sending an IMS format transport layer or above connection request message, such as a MSRP connect message, to the IMS Bridge 180. The IMS bridge 180 responds to the MSRP connect message by sending a non-IMS format transport layer or above connection request message, such as an HTTP/TCP/UDP connect message, to the non-IMS device. Now that the communication session has been established, the IMS Bridge 180 may translate messages between the IMS format used by the IMS device and IMS network 110 and a non-IMS format used by the non-IMS device.

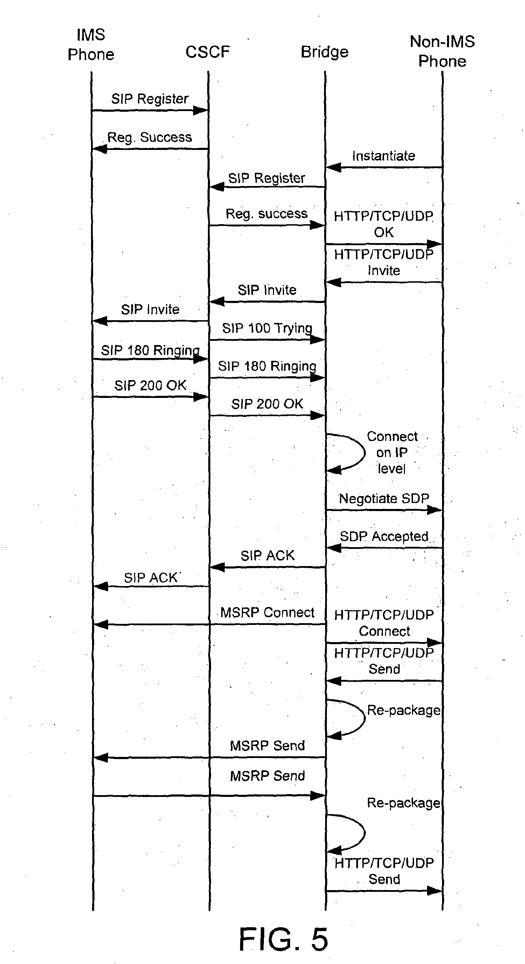

FIG. 5 is a message flow diagram that illustrates operations for facilitating a communication session between an IMS device and a non-IMS device in which the non-IMS device initiates the call to the IMS device, in accordance with some embodiments of the present invention. Referring to FIGS. 5 and 1, an IMS device registers with the IMS network 110 via the CSCF 130. A non-IMS device communicates with the IMS Bridge 180 to instantiate a registration procedure for the IMS Bridge 180 with the IMS network 110 as a proxy for the IMS device. The IMS Bridge 180 registers itself with the IMS network 110 via the CSCF 130 and informs the non-IMS device that the registration was successful via an HTTP/TCP/UDP OK message.

The non-IMS device initiates a call to an IMS device via an HTTP/TCP/UDP invite message to the IMS Bridge 180. The IMS Bridge 180 translates the HTTP/TCP/UDP invite message to a SIP invite message, which is forwarded to the IMS device via the CSCF 130. The CSCF 130 informs the IMS Bridge 180 that the call attempt is in progress with a SIP 100 trying message.

The IMS device notifies the IMS Bridge 180 that the connection is successfully established with a SIP 180 ringing message along with a SIP 200 OK message, which causes the IMS Bridge 180 to establish a network level, e.g. IP level connection, between the IMS device and the non-IMS device. The IMS Bridge 180 may then use SDP to convey the details of the description of the communication session to the non-IMS device. In accordance with some embodiments of the present invention, the IMS Bridge 180 may use SDP to negotiate a media type and/or communication format with the non-IMS device.

After negotiating any SDP parameters with the non-IMS device, the IMS Bridge 180 may inform the IMS device via the CSCF 130 that the call setup has been successful using the SIP ACK message. The IMS Bridge 180 may send an IMS format transport layer or above connection request message, such as a MSRP connect message, to the IMS device and a non-IMS format transport layer or above connection request message, such as an HTTP/TCP/UDP connect message, to the non-IMS device to establish a communication session. Now that the communication session has been established, the IMS Bridge 180 may translate messages between the IMS format used by the IMS device and IMS network 110 and a non-IMS format used by the non-IMS device.

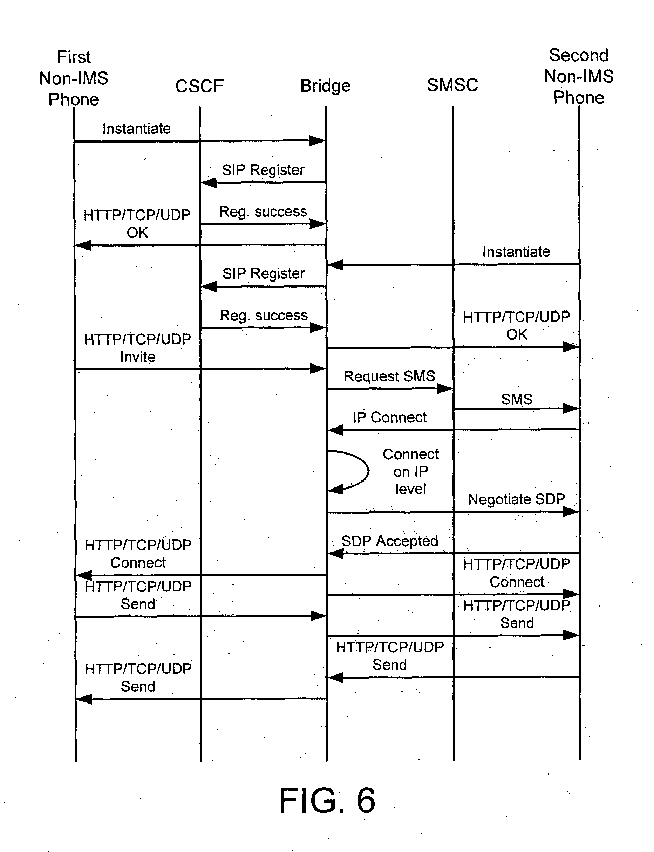

FIG. 6 is a message flow diagram that illustrates operations for facilitating a communication session between two non-IMS devices over an IMS network, in accordance with some embodiments of the present invention. Referring to FIGS. 6 and 1, a first non-IMS device communicates with the IMS Bridge 180 to instantiate a registration procedure for the IMS Bridge 180 with the IMS network 110 as a proxy for a second non-IMS device. The IMS Bridge 180 registers itself with the IMS network 110 via the CSCF 130 and informs the first non-IMS device that the registration was successful via an HTTP/TCP/UDP OK message. Similarly, a second non-IMS device communicates with the IMS Bridge 180 to instantiate a registration procedure for the IMS Bridge 180 with the IMS network 110 as a proxy for a first non-IMS device. The IMS Bridge 180 registers itself with the IMS network 110 via the CSCF 130 and informs the second non-IMS device that the registration was successful via an HTTP/TCP/UDP OK message.

The first non-IMS device initiates a call to the second non-IMS device via an HTTP/TCP/UDP invite message to the IMS Bridge 180. The IMS Bridge 180 sends an SMS call request message to the SMSC, which forwards the-SMS call request message to the second non-IMS device and causes the application 375 installed thereon to launch. In some embodiments, if the application 375 is not currently installed, then the SMS request message may include a Uniform Resource Indicator (URI) that identifies a location where the application may be downloaded from. In some embodiments, even if the application 375 is already installed, an updated or different version of the application may be downloaded and installed before it is launched.. The second non-IMS device may then communicate with the IMS Bridge 180 to establish a network level, e.g. IP level connection, between the first and second non-IMS devices. The IMS Bridge 180 may then use SDP to convey the details of the description of the communication session to the second non-IMS device. In accordance with some embodiments of the present invention, the IMS Bridge 180 may use SDP to negotiate a media type and/or communication format with the second non-IMS device.

After negotiating any SDP parameters with the second non-IMS device, the IMS Bridge 180 may send a non-IMS format transport layer or above connection request message, such as an HTTP/TCP/UDP connect message, to both the first and second non-IMS devices to establish a communication session. Now that the communication session has been established, the IMS Bridge 180 may forward messages between the first and second non-IMS devices without the need for translation as both devices use a non-IMS format, such as HTTP/TCP/UDP.

In some embodiments described above with respect to FIGS. 4 - 6, the CSCF 130 may provide the IMS Bridge 180 with temporary credentials to register a non-IMS device with the IMS network 110 to increase the likelihood that the IMS Bridge 180 is not misappropriated by other devices to establish communication sessions over the IMS network 110.

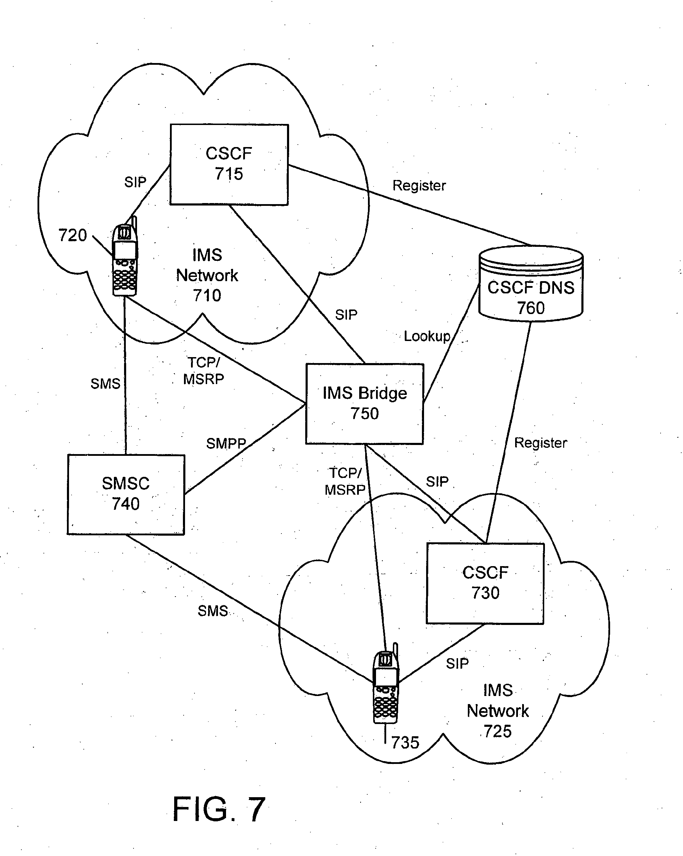

Referring now to FIG. 7, an exemplary communication network, in accordance with further embodiments of the present invention, includes a first IMS network 710 that comprises a CSCF 715 and an IMS enabled device 720, which are connected as shown, and a second IMS network 725 that comprises a CSCF 730 and an IMS enabled device 735, which are connected as shown. As discussed above, certain IMS features or services may not work properly when the parties involved are on separate IMS networks associated with different domains. As shown in FIG. 7, the two IMS networks 710 and 725 are connected by an SMSC 740, an IMS Bridge 750, and a CSCF Domain Name Service (DNS) 760 that is configured to translate domain names for the CSCFs 715 and 730 into IP addresses.

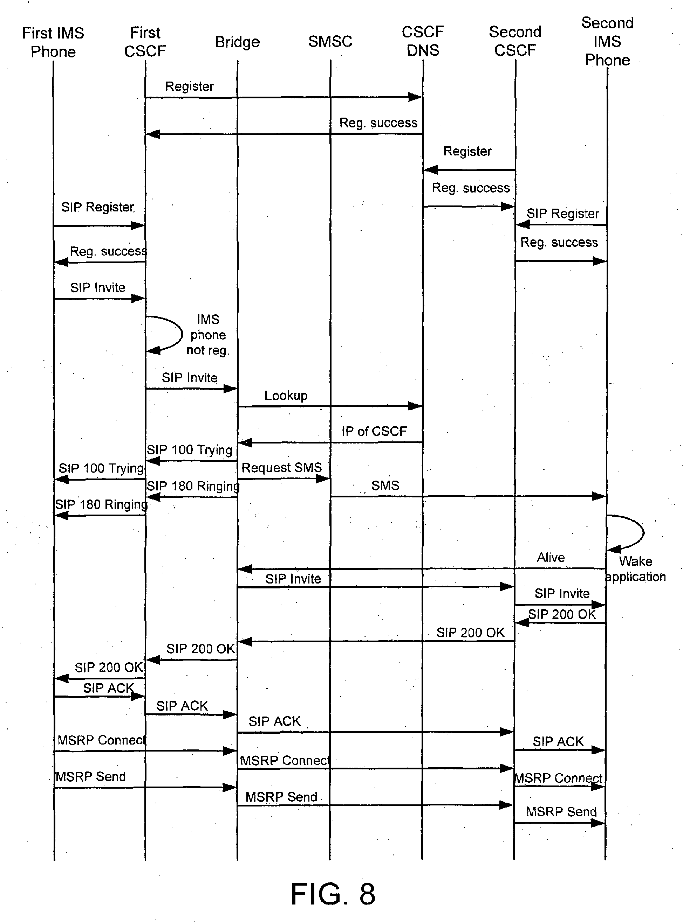

FIG. 8 is a message flow diagram that illustrates operations for facilitating a communication session between IMS devices on different IMS networks, in accordance with some embodiments of the present invention. Referring to FIGS. 8 and 7, the first CSCF 715 registers its IP address with the CSCF DNS 760 and the second CSCF 730 registers its IP address with the CSCF DNS 760. The first IMS device 720 registers with the IMS network 710 via the CSCF 715 and the second IMS device 735 registers with the IMS network 725 via the CSCF 730. The first IMS device 720 initiates the communication session by sending an SIP Invite message to the first CSCF 715, which recognizes that the called device is not in the IMS network 710 and, therefore, is not registered.

The first CSCF 715 forwards the SIP Invite message to the IMS Bridge 750, which performs a lookup of the IP address associated with the second CSCF 730. The IMS Bridge 750 by way of the first CSCF 715 informs the first IMS device 720 that the call attempt is in progress with a SIP 100 trying message. The IMS Bridge 750 sends a call request message to the SMSC 740. The IMS Bridge 750 initiates a SIP 180 ringing message, which is sent to the originating IMS device 720 via the CS,CF 715.

The SMSC 740 forwards an SMS call request message to the second IMS device 735, which causes the application 275 installed thereon to launch. In some embodiments, if the application 275 is not currently installed, then the SMS request message may include a Uniform Resource Indicator (URI) that identifies a location where the application may be downloaded from. In some embodiments, even if the application 275 is already installed, an updated or different version of the application may be downloaded and installed before it is launched.

The second IMS device 735 notifies the IMS Bridge 750 that the application has launched and, in response, the IMS Bridge 750 forwards the SIP Invite message to the second IMS device 735 via the second CSCF 730. The second IMS device 735 then sends a SIP 200 OK message back to the first IMS device 720 by way of the second CSCF 730, the IMS Bridge 750, and the first CSCF 715 to inform the first IMS device 720 that the call setup has been successful. In response, the first IMS device 720 sends a SIP ACK message to acknowledge the establishment of the communication session via the same network path.

Following the acknowledgement, the first IMS device 720 sends a connection request message, such as an MSRP connect message, to the second IMS device 735 by way of the IMS Bridge 750 and the second CSCF 730. Now that the communication session has been established, the first IMS device 720 may send messages to the second IMS device 735 by way of the IMS Bridge 750 and the second CSCF 730. Likewise, the second IMS device 735 may send messages to the first IMS device 720 by way of the IMS Bridge 750 and the first CSCF 715.

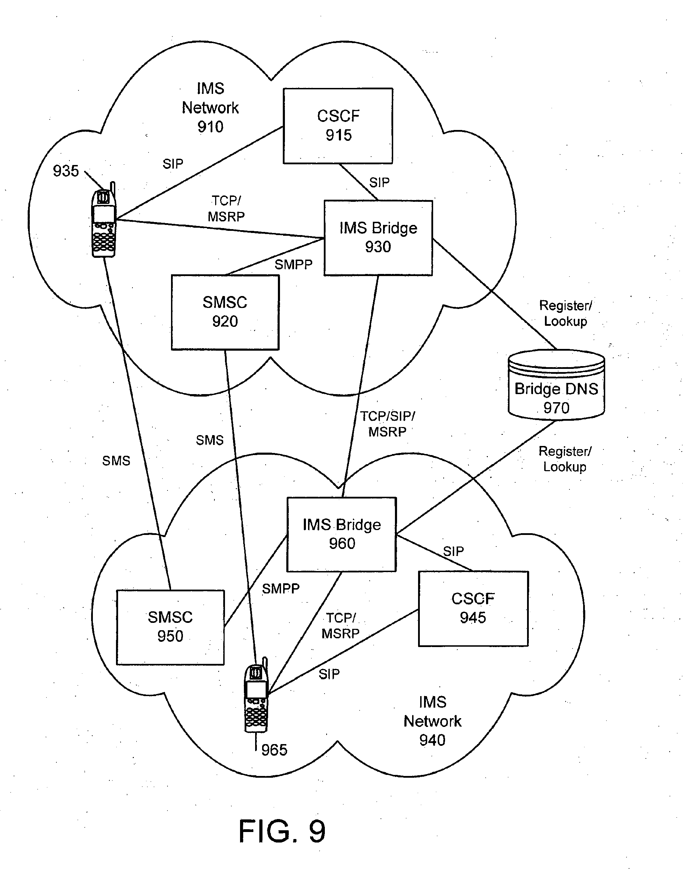

Referring now to FIG. 9, an exemplary communication network, in accordance with further embodiments of the present invention, includes a first IMS network 910 that comprises a CSCF 915, an SMSC 920, an IMS Bridge 930, and an IMS enabled device 920, which are connected as shown, and a second IMS network 940 that comprises a CSCF 945, an SMSC 950, an IMS Bridge 960, and an IMS enabled device 965, which are connected as shown. As discussed above, certain IMS features or services may not work properly when the parties involved are on separate IMS networks associated with different domains. As shown in FIG. 9, the two IMS networks 910 and 940 are connected by a Bridge Domain Name Service (DNS) 970 that is configured to translate domain names for the IMS Bridges 930 and 960 into IP addresses.

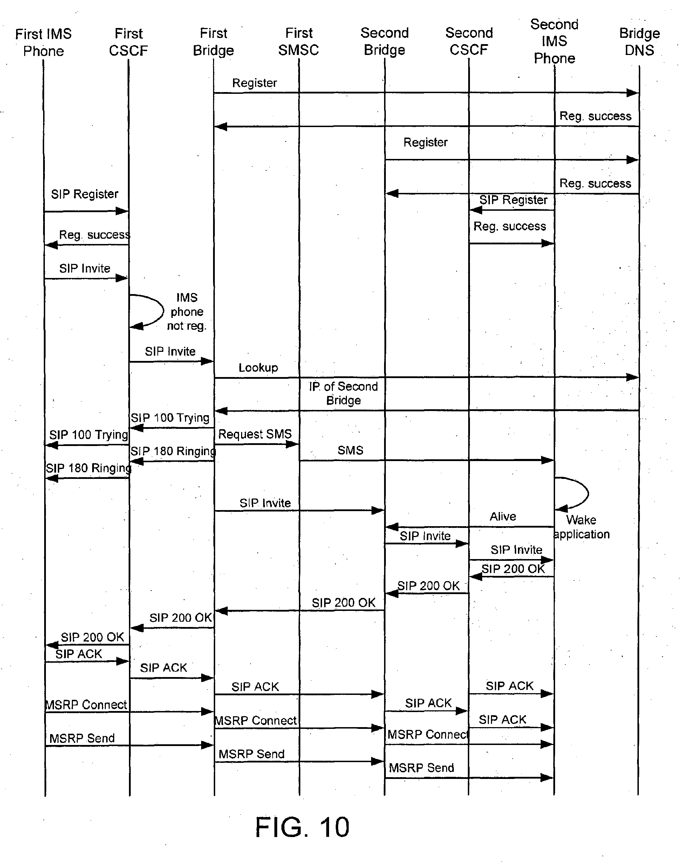

FIG. 10 is a message flow diagram that illustrates operations for facilitating a communication session between IMS devices on different IMS networks, in accordance with some embodiments of the present invention. Referring to FIGS. 10 and 9, the first IMS Bridge 930 registers its IP address with the Bridge DNS 970 and the second IMS Bridge 960 registers its IP address with the Bridge DNS 970. The first IMS device 935 registers with the IMS network 910 via the CSCF 915 and the second IMS device 965 registers with the IMS network 940 via the CSCF 945. The first IMS device 935 initiates the communication session by sending an SIP Invite message to the first CSCF 915, which recognizes that the called device is not in the IMS network 910 and, therefore, is not registered.

The first CSCF 915 forwards the SIP Invite message to the first IMS Bridge 930, which performs a lookup of the IP address associated with the second IMS Bridge 960. The first IMS Bridge 930 by way of the first CSCF 915 informs the first IMS device 935 that the call attempt is in progress with a SIP 100 trying message. The first IMS Bridge 930 sends a call request message to the first SMSC 920. The first IMS Bridge 930 initiates a SIP 180 ringing message, which is sent to the originating IMS device 935 via the first CSCF 915.

The first SMSC 920 forwards an SMS call request message to the second IMS device 965, which causes the application 275 installed thereon to launch. In some embodiments, if the application 275 is not currently installed, then the SMS request message may include a Uniform Resource Indicator (URI) that identifies a location where the application may be downloaded from. In some embodiments, even if the application 275 is already installed, an updated or different version of the application may be downloaded and installed before it is launched.

The second IMS device 765 notifies the second IMS Bridge 960 that the application has launched and, in response, the second IMS Bridge 960 forwards the SIP Invite message to the second IMS device 965 via the second CSCF 945. The second IMS device 965 then sends a SIP 200 OK message back to the first IMS device 935 by way of the second CSCF 945, the second IMS Bridge 960, the first IMS Bridge 930, and the first CSCF 915 to inform the first IMS device 935 that the call setup has been successful. In response, the first IMS device 935 sends a SIP ACK message to acknowledge the establishment of the communication session via the same network path.

Following the acknowledgement, the first IMS device 935 sends a connection request message, such as an MSRP connect message, to the second IMS device 965 by way of the first IMS Bridge 930, the second IMS Bridge 960, and the second CSCF 945. Now that the communication session has been established, the first IMS device 935 may send messages to the second IMS device 965 by way of the first IMS Bridge 930, the second IMS Bridge 960, and the second CSCF 945. Likewise, the second IMS device 965 may send messages to the first IMS device 935 by way of the second IMS Bridge 960, the first IMS Bridge 930, and the first CSCF 915.

The message flow diagrams of FIG. 4 - 6, 8, and 10 illustrate the architecture, functionality, and operations of embodiments of methods, electronic devices, communication networks and/or computer program products for communication between IMS and non-IMS devices over an IMS network. In this regard, each message represents a module, segment, or portion of code, which comprises one or more executable instructions for implementing the specified logical function(s). It should also be noted that in other implementations, the function(s) noted in the messages may occur out of the order noted in FIG. 4 - 6, 8, and 10. For example, two messages shown in succession may, in fact, be executed substantially concurrently or the messages may sometimes be executed in the reverse order, depending on the functionality involved.

Many variations and modifications can be made to the embodiments without departing from the scope of the present invention, as set forth in the following claims.

## Claims

1. A method of operating a bridge device (180) to establish communication between an Internet Protocol, IP Multimedia Subsystem, IMS device (30) and a non-IMS device (10, 20), comprising:
receiving a request to instantiate as a proxy for the non-IMS device (10, 20) with an IMS network (110) from a Call Session Control Function, CSCF (130) in the IMS network (110);
registering as the proxy for the non-IMS device (10, 20) with the CSCF (130);
establishing a network layer level connection between the IMS device (30) and the non-IMS device (10, 20),
**characterized in**
the method further comprising:
using Session Description Protocol, SDP protocol messaging to negotiate a media type and/or format for communication with the non-IMS device (10, 20) responsive to establishing the network layer level connection, and then
receiving an IMS format request to establish a transport layer level or above connection with the non-IMS device (10, 20) from the IMS device (30);
sending a non-IMS format request to establish the transport layer level or above connection to the non-IMS device (10, 20) responsive to receiving the IMS format request to establish the transport layer level or above connection; and
translating messages received from the IMS device (30) from an IMS format to a non-IMS format for transmission to the non-IMS device (10, 20) and messages received from the non-IMS device (10, 20) from the non-IMS format to the IMS format for transmission to the IMS device (30) responsive to establishing the transport layer level or above connection between the IMS device (30) and the non-IMS device (10, 20).

2. The method according to claim 1, wherein receiving the request to instantiate as a proxy for the non-IMS device (10,20) comprises:
receiving the request to instantiate the non-IMS device (10, 20) responsive to the CSCF (130) receiving a Session Initiation Protocol, SIP invite message for the non-IMS device (10, 20) from the IMS device (30).

3. The method according to any of the claims 1-2, wherein establishing the network layer level connection between the IMS device (30) and the non-IMS device (10, 20) comprises:
sending a Short Message Service, SMS message to launch an IMS service application on the non-IMS device (10, 20);
receiving an IP connect message from the non-IMS device (10, 20) responsive to the SMS connection request message; and
establishing an IP level connection between the IMS device 30) and the non-IMS device (10, 20).

4. The method according to claim 3, wherein the SMS message comprises a Uniform Resource Indicator, URI that identifies a location for downloading the IMS service application.

5. The method of according to any of the claims 1-4, wherein the IMS format is a Message Session Relay Protocol, MSRP format.

6. The method according to any of the claims 1-5, wherein the non-IMS format request is a Hypertext Transfer Protocol, HTTP format, Transmission Control Protocol, TCP format, and/or User Datagram Protocol, UDP format.

7. A method of operating a bridge device (180) to establish communication between an Internet Protocol, IP Multimedia Subsystem, IMS device (30) and a non-IMS device (10, 20), comprising:
receiving a request to instantiate as a proxy for the IMS device (30) with an IMS network (110) from the non-IMS device (10, 20);
registering as the proxy for the IMS device (30) with a Call Session Control Function, CSCF (130) in the IMS network (110);
receiving a non-IMS format invite message for the IMS device (30) from the non-IMS device (10, 20);
sending an IMS format invite message to the IMS device (30) responsive to receiving the non-IMS format invite message;
establishing a network layer level connection between the IMS device (30) and the non-IMS device (10,20),
**characterized in**
the method further comprising:
using Session Description Protocol, SDP protocol messaging to negotiate a media type and/or format for communication with the non-IMS device (10, 20) responsive to establishing the network layer level connection, and then
sending an IMS format request to establish a transport layer level or above connection with the non-IMS device (10, 20) to the IMS device (30);
sending a non-IMS format request to establish the transport layer level or above connection to the non-IMS device (10, 20); and
translating messages received from the non-IMS device (10, 20) from a non-IMS format to an IMS format for transmission to the IMS device (30) and messages received from the IMS device (30) from the IMS format to the non-IMS format for transmission to the non-IMS device (10, 20) responsive to establishing the transport layer level or above connection between the non-IMS device (10, 20) and the IMS device (30).

8. The method according to claim 7, wherein receiving the request to instantiate as a proxy for the non-IMS device (10, 20) comprises:
sending a Session Initiation Protocol, SIP registration message for the non-IMS device (10, 20) to the CSCF (130).

9. The method according to any of the claims 7-8, wherein establishing the network layer level connection between the IMS device (30) and the non-IMS device (10, 20) comprises:
establishing an IP level connection between the IMS device (30) and the non-IMS device (10, 20).

10. The method according to any of the claims 7-9, wherein the IMS format is a Session Initiation Protocol, SIP format and/or a Message Session Relay Protocol, MSRP format.

11. The method according to any of the claims 7-10, wherein the non-IMS format is a Hypertext Transfer Protoccol, HTTP format, Transmission Control Protocol, TCP format, and/or User Datagram Protocol, UDP format.

## Patentansprüche

1. Ein Verfahren zum Betreiben einer Brückenvorrichtung (180) zum Einrichten einer Kommunikation zwischen einer Internet-Protokoll, IP,-Multimedia-Subsystem, IMS,-Vorrichtung (30) und einer Nicht-IMS-Vorrichtung (10,20) umfassend:
Empfangen einer Anfrage zum Instanziieren als einen Proxy für die Nicht-IMS-Vorrichtung (10,20) mit einem IMS-Netzwerk (110) von einer Call-Session-Control-Funktion, CSCF, (130) in dem IMS-Netzwerk (110);
Registrieren als den Proxy für die Nicht-IMS-Vorrichtung (10,20) mit der CSCF (130);
Einrichten einer Netzwerkschichtebenenverbindung zwischen der IMS-Vorrichtung (30) und der Nicht-IMS-Vorrichtung (10,20),
**dadurch gekennzeichnet,**
**dass** das Verfahren weiter umfasst:
Verwenden von Session-Description-Protocol-Nachrichtenübermittlung zum Verhandeln eines Medientyps und/oder eines Formats zur Kommunikation mit der Nicht-IMS-Vorrichtung (10,20) in Reaktion auf das Einrichten der Netzwerkschichtebenenverbindung und dann
Empfangen einer IMS-Formatsanfrage zum Einrichten einer Transportschichtebenen- oder höheren Verbindung mit der Nicht-IMS-Vorrichtung (10,20), von der IMS-Vorrichtung (30) ;
Senden einer Nicht-IMS-Formatsanfrage zum Einrichten der Transportschichtebenen- oder höheren Verbindung mit der Nicht-IMS-Vorrichtung (10,20) in Reaktion auf das Empfangen der IMS-Formatsanfrage zum Einrichten der Transportschichtebenen- oder höheren Verbindung; und
Übersetzen von von der IMS-Vorrichtung (30) empfangenen Nachrichten von einem IMS-Format in einen Nicht-IMS-Format zum Senden an die Nicht-IMS-Vorrichtung (10,20) und von von der Nicht-IMS-Vorrichtung (10,20) empfangenen Nachrichten von dem Nicht-IMS-Format in das IMS-Format zum Senden an die IMS-Vorrichtung (30) in Reaktion auf das Einrichten der Transportschichtebenen- oder höheren Verbindung zwischen der IMS-Vorrichtung (30) und der Nicht-IMS-Vorrichtung (10,20).

2. Das Verfahren gemäß Anspruch 1, wobei das Empfangen der Anfrage zum Instanziieren als einen Proxy für die Nicht-IMS-Vorrichtung (10,20) umfasst:
Empfangen der Anfrage zum Instanziieren der Nicht-IMS-Vorrichtung (10,20) in Reaktion darauf, dass die CSCF (130) eine Session-Initiation-Protocol, SIP,-Einladungsnachricht für die Nicht-IMS-Vorrichtung (10,20) von der IMS-Vorrichtung (30) empfängt.

3. Das Verfahren gemäß einem der Ansprüche 1-2, wobei das Einrichten der Netzwerkschichtebenenverbindung zwischen der IMS-Vorrichtung (30) und der Nicht-IMS-Vorrichtung (10,20) umfasst:
Senden einer Short-Message-Service, SMS, (Kurznachrichtendienst)-Nachricht zum Starten einer IMS-Dienstanwendung auf der Nicht-IMS-Vorrichtung (10,20);
Empfangen einer IP-Verbindungsnachricht von der Nicht-IMS-Vorrichtung (10,20) in Reaktion auf die SMS-Verbindungsanfragenachricht; und
Einrichten einer IP-Ebenenverbindung zwischen der IMS-Vorrichtung (30) und der Nicht-IMS-Vorrichtung (10,20).

4. Das Verfahren gemäß Anspruch 3, wobei die SMS-Nachricht einen Uniform-Resource-Indicator, URI, enthält, welcher eine Position zum Herunterladen der IMS-Dienstanwendung identifiziert.

5. Das Verfahren gemäß einem der Ansprüche 1-4, wobei das IMS-Format ein Message-Session-Relay-Protocol, MSRP,-Format ist.

6. Das Verfahren gemäß einem der Ansprüche 1-5, wobei die Nicht-IMS-Formatsanfrage ein Hypertext-Transfer-Protocol, HTTP,-Format, ein Transmission-Control-Protocol, TCP,-Format und/oder ein User-Datagram-Protocol, UDP,-Format ist.

7. Ein Verfahren zum Betreiben einer Brückenvorrichtung (180) zum Einrichten einer Kommunikation zwischen einer Internet-Protokoll, IP,-Multimedia-Subsystem, IMS,-Vorrichtung (30) und einer Nicht-IMS-Vorrichtung (10,20) umfassend:
Empfangen einer Anfrage zum Instanziieren als einen Proxy für die IMS-Vorrichtung (30) mit einem IMS-Netzwerk (110) von der Nicht-IMS-Vorrichtung (10,20);
Registrieren als den Proxy für die IMS-Vorrichtung (30) mit einer Call-Session-Control-Funktion, CSCF, (130) in dem IMS-Netzwerk (110);
Empfangen einer Nicht-IMS-Format-Einladungsnachricht für die IMS-Vorrichtung (30) von der Nicht-IMS-Vorrichtung (10,20);
Senden einer IMS-Format-Einladungsnachricht an die IMS-Vorrichtung (30) in Reaktion auf das Empfangen der Nicht-IMS-Format-Einladungsnachricht;
Einrichten einer Netzwerkschichtebenenverbindung zwischen der IMS-Vorrichtung (30) und der Nicht-IMS-Vorrichtung (10,20),
**dadurch gekennzeichnet,**
**dass** das Verfahren weiter umfasst:
mittels Session-Description-Protocol, STP,-Protokollnachrichtenübermittlung zum Verhandeln eines Medientyps und/oder eines Formats zur Kommunikation mit der Nicht-IMS-Vorrichtung (10,20) in Reaktion auf das Einrichten der Netzwerkschichtebenenverbindung und danach
Senden einer IMS-Formatsanfrage zum Einrichten einer Transportschichtebenen- oder höheren Verbindung mit der Nicht-IMS-Vorrichtung (10,20) an die IMS-Vorrichtung (30) ;
Senden einer Nicht-IMS-Formatsanfrage zum Einrichten der Transportschichtebenen- oder höheren Verbindung an die Nicht-IMS-Vorrichtung (10,20); und
Übersetzen von von der Nicht-IMS-Vorrichtung (10,20) empfangenen Nachrichten von einem Nicht-IMS-Format in ein IMS-Format zum Senden an die IMS-Vorrichtung (30) und von von der IMS-Vorrichtung (30) empfangenen Nachrichten von dem IMS-Format in das Nicht-IMS-Format zum Senden an die Nicht-IMS-Vorrichtung (10,20) in Reaktion auf das Einrichten der Transportschichtebenen- oder höheren Verbindung zwischen der Nicht-IMS-Vorrichtung (10,20) und der IMS-Vorrichtung (30).

8. Das Verfahren gemäß Anspruch 7, wobei das Empfangen der Anfrage zum Instanziieren als einen Proxy für die Nicht-IMS-Vorrichtung (10,20) umfasst:
Senden einer Session-Initiation-Protocol, SIP, Registrierungsnachricht für die Nicht-IMS-Vorrichtung (10, 20) an die CSCF (130).

9. Das Verfahren gemäß einem der Ansprüche 7-8, wobei das Einrichten der Netzwerkschichtebenenverbindung zwischen der IMS-Vorrichtung (30) und der Nicht-IMS-Vorrichtung (10,20) umfasst:
Einrichten einer IP-Ebenenverbindung zwischen der IMS Vorrichtung (30) und der Nicht-IMS-Vorrichtung (10,20).

10. Das Verfahren gemäß einem der Ansprüche 7-9, wobei das IMS-Format ein Session-Initiation-Protocol, SIP,-Format und/oder ein Message-Session-Relay-Protocol, MSRP,-Format ist.

11. Das Verfahren gemäß einem der Ansprüche 7-10, wobei das nicht-IMS-Format ein Hypertext-Transfer-Protocol, HTTP,-Format, ein Transmission-Control-Protocol, TCP,-Format und/oder ein User-Datagram-Protocol, UDP,-Format ist.

## Revendications

1. Procédé de fonctionnement d'un dispositif de pontage (180) afin d'établir une communication entre un dispositif IMS (30), pour « *Internet Protocol Multimedia Subsystem* » - sous-système multimédia avec protocole internet, et un dispositif non-IMS (10, 20), comprenant les étapes consistant à :
recevoir une demande d'intervention pour le dispositif non-IMS (10, 20) comme serveur mandataire auprès d'un réseau IMS (110) en provenance d'une fonction de commande de session d'appel (130), CSCF pour « *Call Session Control Function* », sur le réseau IMS (110) ;
s'enregistrer auprès de la fonction CSCF (130) comme serveur mandataire pour le dispositif non-IMS (10, 20) ;
établir une connexion au niveau de la couche de réseau entre le dispositif IMS (30) et le dispositif non-IMS (10, 20) ;
le procédé étant **caractérisé en ce qu'**il comprend en outre les étapes consistant à :
utiliser la messagerie du protocole de description de session, SDP pour « *Session Description Protocol* », afin de négocier un type de média et/ou un format pour la communication avec le dispositif non-IMS (10, 20) après avoir établi la connexion au niveau de la couche de réseau ; puis
recevoir une demande de format IMS afin d'établir une connexion au niveau de la couche de transport ou au-dessus avec le dispositif non-IMS (10, 20) depuis le dispositif IMS (30) ;
envoyer une demande de format non-IMS afin d'établir une connexion au niveau de la couche de transport ou au-dessus avec le dispositif non-IMS (10, 20) en réponse à la réception de la demande de format IMS afin d'établir la connexion au niveau de la couche de transport ou au-dessus ; et
traduire des messages reçus du dispositif IMS (30) entre un format IMS et un format non-IMS pour leur transmission au dispositif non-IMS (10, 20) et des messages reçus du dispositif non-IMS (10, 20) entre le format non-IMS et le format IMS pour leur transmission au dispositif IMS (30) après avoir établi la connexion au niveau de la couche de transport ou au-dessus entre le dispositif IMS (30) et le dispositif non-IMS (10, 20).

2. Procédé selon la revendication 1, dans lequel l'étape de réception d'une demande d'intervention comme serveur mandataire pour le dispositif non-IMS (10, 20) comprend l'étape consistant à :
recevoir la demande d'intervention pour le dispositif non-IMS (10, 20) à la suite de la réception par la fonction CSCF (130) d'un message d'invitation du protocole de lancement de session, SIP pour « *Session Initiation Protocol* », destiné au dispositif non-IMS (10, 20) en provenance du dispositif IMS (30).

3. Procédé selon l'une quelconque des revendications 1 et 2, dans lequel l'étape d'établissement de la connexion au niveau de la couche de réseau entre le dispositif IMS (30) et le dispositif non-IMS (10, 20) comprend les étapes consistant à :
envoyer un message SMS, pour « *Short Message Service » -* service de messages courts, afin de lancer une application de service IMS sur le dispositif non-IMS (10, 20) ;
recevoir un message de connexion IP du dispositif non-IMS (10, 20) en réponse au message SMS de demande de connexion ; et
établir une connexion au niveau IP entre le dispositif IMS (30) et le dispositif non-IMS (10, 20).

4. Procédé selon la revendication 3, dans lequel le message SMS comprend un indicateur uniforme de ressource, URI pour « *Uniform Resource Indicator* », qui identifie un endroit d'où télécharger l'application de service IMS.

5. Procédé selon l'une quelconque des revendications 1 à 4, dans lequel le format IMS est un format de message de protocole de relais de session, MSRP pour « *Message Session Relay Protocol ».*

6. Procédé selon l'une quelconque des revendications 1 à 5, dans lequel la demande de format non-IMS est un format HTTP, pour « *Hypertext Transfer Protocol* » *-* Protocole de transfert hypertextuel, un format TCP, pour « *Transmission Control Protocol » -* Protocole de commande d'émission, et/ou un format UDP, pour « *User Datagram Protocol » -* Protocole de datagrammes utilisateurs.

7. Procédé de fonctionnement d'un dispositif de pontage (180) pour établir une communication entre un dispositif IMS (30), pour « *Internet Protocol Multimedia Subsystem* » *-* sous-système multimédia avec protocole internet, et un dispositif non-IMS (10, 20), comprenant les étapes consistant à :
recevoir du dispositif non-IMS (10, 20) une demande d'intervention comme serveur mandataire pour le dispositif IMS (30) auprès d'un réseau IMS (110) ;
s'enregistrer auprès d'une fonction de commande de session d'appel (130), CSCF pour « *Call Session Control Function* », du réseau IMS (110) comme serveur mandataire pour le dispositif IMS (30) ;
recevoir du dispositif non-IMS (10, 20) un message d'invitation au format non-IMS destiné au dispositif IMS (30) ;
envoyer au dispositif IMS (30) un message d'invitation au format IMS en réponse à la réception du message d'invitation au format non-IMS ;
établir une connexion au niveau de la couche de réseau entre le dispositif IMS (30) et le dispositif non-IMS (10, 20) ;
le procédé étant **caractérisé en ce qu'**il comprend en outre les étapes consistant à :
utiliser la messagerie du protocole de description de session, SDP pour « *Session Description Protocol* », afin de négocier un type de média et/ou un format pour la communication avec le dispositif non-IMS (10, 20) après avoir établi la connexion au niveau de la couche de réseau ; puis
envoyer au dispositif IMS (30) une demande de format IMS afin d'établir une connexion au niveau de la couche de transport ou au-dessus avec le dispositif non-IMS (10, 20) ;
envoyer au dispositif non-IMS (10, 20) une demande de format non-IMS afin d'établir une connexion au niveau de la couche de transport ou au-dessus ; et
traduire des messages reçus du dispositif non-IMS (10, 20) entre le format non-IMS et le format IMS pour leur transmission au dispositif IMS (30) et des messages reçus du dispositif IMS (30) entre un format IMS et un format non-IMS pour leur transmission au dispositif non-IMS (10, 20) après avoir établi la connexion au niveau de la couche de transport ou au-dessus entre le dispositif non-IMS (10, 20) et le dispositif IMS (30).

8. Procédé selon la revendication 7, dans lequel l'étape de réception de la demande d'intervention comme serveur mandataire pour le dispositif non-IMS (10, 20) comprend l'étape consistant à :
envoyer à la fonction CSCF (130) un message d'enregistrement au protocole de lancement de session, SIP pour « *Session Initiation Protocol* », pour le dispositif non-IMS (10, 20).

9. Procédé selon l'une quelconque des revendications 7 et 8, dans lequel l'étape d'établissement de la connexion au niveau de la couche de réseau entre le dispositif IMS (30) et le dispositif non-IMS (10, 20) comprend les étapes consistant à :
établir une connexion au niveau IP entre le dispositif IMS (30) et le dispositif non-IMS (10, 20).

10. Procédé selon l'une quelconque des revendications 7 à 9, dans lequel le format IMS est un format du protocole SIP ou un format de message de protocole de relais de session, MSRP pour « *Message Session Relay Protocol* ».

11. Procédé selon l'une quelconque des revendications 7 à 10, dans lequel le format non-IMS est un format HTTP, pour « *Hypertext Transfer Protocol* » *-* Protocole de transfert hypertextuel, un format TCP, pour *« Transmission Control Protocol* » *-* Protocole de commande d'émission, et/ou un format UDP, pour « *User Datagram Protocol » -* Protocole de datagrammes utilisateurs.
